# EUROPEAN PATENT SPECIFICATION

(11) **EP 3 940 283 B1**
(45) Date of publication and mention of the grant of the patent: **02.07.2025**
(21) Application number: 21184846.0
(22) Date of filing: 09.07.2021
(51) Int. Cl.: F16L 37/091, F16L 37/14

(54) **FLUID CONNECTOR**
FLUIDVERBINDER
CONNECTEUR DE FLUIDE

(30) Priority: 16.07.2020 DE 102020118796
(43) Date of publication of application: 19.01.2022
(73) Proprietor: Gealan Formteile GmbH, 95145 Oberkotzau (DE)
(72) Inventor: BUHEITEL, Christian, 95111 Rehau (DE); SAUNUS, Christian, 08223 Grünbach (DE)
(74) Representative: Fleuchaus & Gallo Partnerschaft mbB

(56) References cited:
- EP-A1- 3 734 135
- CN-U- 2 120 244
- JP-A- 2009 014 017
- JP-A- H09 166 252
- JP-U- S5 237 627

## Description

### Field

The present invention relates to a fluid connector for coupling two or more fluid conduits in a hydraulic or pneumatic system, especially but not exclusively for hydraulically or pneumatically coupling two fluid conduits.

### Background

JP 2009 014017 A discloses a joint connectable to a water pipe of a synthetic resin. The joint includes an engagement body insertable into the joint and including a locking ring for engaging the pipe, and a removable locking means for retaining the engagement body within the joint.

JP S52 37627 U discloses a pipe joint connectable to a pipe (such as a vinyl tube). The joint includes a threaded portion, within which is locatable a check plate for engaging the pipe. The check plate is retained in the joint by a stop plate.

CN 2 120 244 U discloses a joint for pipe fittings. The joint includes a squeeze ring for engaging a pipe. The squeeze ring is retained in the joint by a horizontal pin.

JP H09 166252 A discloses a pipe joint that includes a broken ring-shaped pipe grip for pipe fittings. When a tightening nut is screwed into a body of the joint body and tightened, the pipe grip-which has a radial slit-is compressed and so urged against the pipe, thereby retaining the pipe in the joint. The pipe grip is retained within the joint between a washer-like presser plate and an inward flange.

### Summary

It is an object of the present invention to provide a connector that can engage a greater range of fluid conduits and/or do so more securely.

The invention provides a connector for forming a fluid connection between at least first and second fluid conduits, comprising: a body defining at least one aperture configured to receive an end of the first fluid conduit; a locking element comprising a pair of flexible engagement arms extending therefrom and configured to accommodate the end of the first fluid conduit; the locking element being configured to be at least partially received by a slot defined by the body and, when the end of the first fluid conduit is located within the body, to engage the first fluid conduit. The engagement arms are configured to be urged tangentially by an internal surface of the slot towards the first fluid conduit; and when the locking element is located in the slot and the end of the first fluid conduit is located in the body, the engagement arms are retained against the first fluid conduit and have lengths such that the locking element at least partially surrounds the first fluid conduit. The connector comprises one or more sets of inwardly directed locking teeth configured to be disposed at an outer surface of the first fluid conduit with the locking teeth engaging the outer surface when the connector is assembled and the end of the first fluid conduit is located in the body. The connector comprises a support configured to support the locking teeth against the first fluid conduit when the end of the first fluid conduit is located in the body. The locking teeth are deformed (and so slant) by the first fluid conduit upon engagement of the first fluid conduit and the locking teeth, wherein the locking teeth resist disengagement by reversal of the engagement. The support is adjacent to the locking element when the connector is assembled, such that the locking element retains the locking teeth in the connector when the connector is assembled. The locking element is configured to in use at least partially surround the first fluid conduit in a span of at least 200° and the slot is defined in part by an internal surface of the body configured to maintain the engagement arms in position against the first fluid conduit.

Thus, the locking teeth engage the fluid conduit, and the locking element both engages the fluid conduit and resists removal of the locking teeth from the fluid connector, i.e. retains the locking teeth in position in the assembled fluid connector. The first fluid conduit is typically held in the correct axial alignment within the connector by an internal surface of the fluid connector.

It will be noted that the locking element is configured to be at least partially received by the slot; in some examples the locking element is also removable intact (or essentially intact) from that slot, but in other examples the locking element may be either not removable once in the slot or removable other with some damage to the locking element.

The set or sets of locking teeth may be removable from the fluid connector (either after removal of the locking element or by removal of the locking element). The first fluid conduit can then be disengaged from the locking teeth, and the fluid connector can be reused (which may include replacing the set of locking teeth if damaged or unsuitable for a subsequent application of the connector).

The inclusion in some embodiments of more than one set of inwardly directed locking teeth provides stronger engagement with the respective hydraulic conduit, without requiring a greater force of engagement of any individual locking tooth with the hydraulic conduit, and distributes the engagement of the locking teeth and the hydraulic conduit over a greater area of the outer surface of that hydraulic conduit, thereby reducing the risk of undue damage to that outer surface.

In an embodiment, the connector is configured for use with a first fluid conduit of circular cross section, and the locking teeth have tips that define a circle or a circular arc of smaller radius than a radius of the first fluid conduit so that the locking teeth are deformed by the first fluid conduit upon engagement of the first fluid conduit and the locking teeth.

In an embodiment, the support comprises an engagement ring or clip that is integral with the locking teeth, and is adapted to be disposed beside (that is, in an axial direction) the locking element when the connector is assembled such that the engagement ring or clip abuts the locking element. The support and set of locking teeth may thus be removable from the fluid connector (after removal of the locking element) and the first fluid conduit disengaged from the locking teeth. Furthermore, in this embodiment, the locking element may comprise or constitute a second support and comprise a second set of locking teeth.

In this arrangement, the locking teeth typically dig into the material of the fluid conduit, to resist the removal of the fluid conduit.

However, in certain other embodiments, the locking teeth are of a material or materials selected to be either softer than, or of comparable hardness to, the first fluid conduit (that is, the outer surface of the first fluid conduit). In such embodiments, the locking may not appreciably dig or intrude into the fluid conduit; instead, axial forces (or the bulk thereof) are transmitted to the locking teeth by frictional engagement of the locking teeth and the fluid conduit. In certain applications of the invention, it may be preferred that the locking teeth are of a material or materials selected to provide a high coefficient of friction with the first fluid conduit, rather than rely on the sharpness of the locking teeth and their ability to dig into the first fluid conduit. The latter (i.e. a high mutual coefficient of friction) will in some examples coincide with the former (in which the teeth are softer than or of comparable hardness to the first fluid conduit).

Hence, in some embodiments, the set of locking teeth is selected so as to provide a frictional engagement with the first fluid conduit that is sufficient to resist expected axial forces. This embodiment is of particular value in those embodiments in which the support comprises an engagement ring or clip that is integral with the locking teeth, and is adapted to be disposed beside the locking element when the connector is assembled. The selection of the appropriate material(s) for the locking teeth is a straightforward matter; it can be made, for example, (i) by measuring or estimating the expected axial forces to which the engagement will be subjected, together with the well-documented frictional or hardness properties of the material of the first fluid conduit and candidate locking teeth materials, (ii) by trial and error, or (iii) by simple experimentation involving the measurement of the resistance to axial forces (to conduit, locking teeth or engagement failure) of various combinations of first fluid conduit material, locking teeth material and axial force. It should be noted that, in many situations, materials can be standardised for any particular application, such that such experimentation will not be unduly arduous.

In an embodiment, the locking teeth are configured to be received by one or more grooves or recesses in an outer surface of the first fluid conduit.

The grooves or recesses can be used to augment or replace the engagement of locking teeth and fluid conduit in which the teeth dig into the fluid conduit, so may be more suitable with certain typical of fluid conduit or when a stronger engagement is required.

In an embodiment, the locking teeth have rounded tips, such that the locking teeth define a corrugated or wave-like internal profile. This configuration may allow readier disengagement of the fluid conduit and locking teeth.

In an embodiment, the locking teeth, or the locking teeth and the support, are of a material selected to be harder than the first fluid conduit. This facilitates the digging into the fluid conduit of the teeth.

In an embodiment, the locking teeth and the support are of metal, and preferably integral.

In various embodiments, the set of locking teeth are configured to in use at least partially surround the first fluid conduit in a span of at least 200°, at least 250°, at least 270°, at least 300°, at least 320°, at least 330°, at least 340°, at least 350° or between 350° and 355°, or approximately 360°.

In various embodiments, the locking element is configured to in use at least partially surround the first fluid conduit in a span of at least 250°, at least 270°, at least 300°, at least 320°, at least 330°, at least 340°, or between 340° to 350° (inclusive) or between 350° to 355° (inclusive), or between 355° to 360° (inclusive).

In an embodiment, the engagement arms are resilient and configured to be spread when inserted into the slot by the first fluid conduit and to assume a configuration once located in the slot such that the engagement arms contact the first fluid conduit.

In an embodiment, the connector further comprises: a further locking element comprising a pair of flexible engagement arms extending therefrom and configured to accommodate the second fluid conduit therebetween, wherein the body of the connector defines a further aperture configured to receive an end of the second fluid conduit, and a further slot configured to receive a further locking element for engaging the second fluid conduit. The further locking element is configured to be at least partially received by the further slot and, when an end of the second fluid conduit is located within the body of the connector, to engage the end of the second fluid conduit, the engagement arms of the further locking element being configured to be urged tangentially by an internal surface of the further slot towards the end of the second fluid conduit. When the further locking element is located in the further slot and the end of the second fluid conduit is located in the body, the engagement arms of the further locking element are retained against the second fluid conduit and have respective lengths such that the further locking element at least partially surrounds the second fluid conduit. The connector comprises one or more sets of inwardly directed locking teeth configured to be disposed at an outer surface of the second fluid conduit with the further set of locking teeth engaging the outer surface of the second fluid conduit when the connector is assembled and the end of the second fluid conduit is located in the body. The connector comprises a further support configured to support the further set of locking teeth against the second fluid conduit when the end of the second fluid conduit is located in the body. The further set of locking teeth are configured so as to be deformed by the second fluid conduit upon engagement of the second fluid conduit and the further set of locking teeth wherein the further set of locking teeth resist disengagement by reversal of the engagement; and the second support is integral with, connected to or adjacent to the further locking element when the connector is assembled, such that the further locking element retains the further set of locking teeth in the connector when the connector is assembled.

Thus, while in some embodiments, the connector is permanently attached to the second fluid conduit, or attached by a conventional mechanism, in this embodiment both the first and second fluid conduit are attached with respective sets of locking teeth.

In this embodiment, the connector is configured for use with a second fluid conduit of circular cross section, and the further set of locking teeth have tips that define a circle or a circular arc of smaller radius than a radius of the second fluid conduit so that the locking teeth are deformed by the second fluid conduit upon engagement of the second fluid conduit and the further set of locking teeth.

It should also be noted that, in some embodiments, the connector is configured to engage three fluid conduits (e.g. as a T junction), four fluid conduits (e.g. arranged like the four axes of a two dimensional Cartesian plane), five fluid conduits (e.g. with four conduits arranged like the four axes of a two dimensional Cartesian plane and a fifth perpendicular to each of the others) or six fluid conduits (e.g. arranged like the six axes of a three dimensional Cartesian space). A connector configured to engage more than six fluid conduits is also envisaged, with the maximum constrained by the size of the connector and the size of the fluid conduits, and hence the number of fluid conduits that can be accommodated around the connector (cf. steric hindrance).

In an embodiment, the locking element comprises snap-lock elements and the slot includes complementary recesses for receiving snap-lock elements, such that, when the locking element is located in the slot, the snap-lock elements are received by and engage the respective recesses.

In an embodiment, the locking element is manufactured from a first material and the body is manufactured from a second material, and/or the base of the locking element is manufactured from a third material and at least parts of the engagement arms are manufactured from a fourth material, and wherein, optionally, the first, second, third, and/or fourth material are selected from a group comprising: Polypropylene (PP), Polyamid (PA), Polyoxymethylene (POM), Polyketon (PK), Polyphthalamide (PPA), Polyphenylene sulfide (PPS) or the like. The first and/or fourth materials may be reinforced by pressure resilient reinforcement components, and preferably bead components, more preferably glass beads, and/or the second and/or third materials are reinforced by pull-resilient reinforcement components, and preferably fibre components, more preferably glass-fibres.

The locking element may be formed integrally from the third and fourth material, and, preferably, the locking element (including if comprising or constituting the support and/or locking teeth) formed integrally from the third and fourth material by multi-component injection moulding.

In the above embodiments, the locking element may additional comprise a strap connecting the locking element and the body of the connector.

In some embodiments, the connector is provided in disassembled form, but in certain other embodiments, the connector is provided in an at least partially assembled form, wherein the locking element or the set of locking teeth is, or both the locking element and the set of locking teeth are, located in the body. This may be employed, for example, in those embodiments in which the locking element comprises or constitutes the support and comprises the locking teeth.

It should also be noted that any of the various individual optional features of described above (and described below, including in the claims), can be combined as suitable and desired.

### Brief Description of the Drawing

In order that the invention may be more clearly ascertained, exemplary embodiments of the invention are hereafter described by reference to the accompanying figures, in which like numerals, if not otherwise specified, denote functionally or structurally like elements.
- Figure 1: is a schematic perspective exploded view of a fluid connector according to a first embodiment of the present invention, in a disengaged state, shown with first and second hydraulic conduits.
- Figure 2A: is a schematic view of the locking jaw of the fluid connector of figure 1.
- Figure 2B: is a schematic view of an alternative lockingjaw of the fluid connector of figure 1.
- Figures 3A-3F: are respective schematic views of various alternative locking jaw of locking teeth of the fluid connector of figure 1.
- Figure 4A: is a schematic cross-sectional view during the engagement of the fluid connector of figure 1 with the first hydraulic conduit.
- Figure 4B: is a schematic cross-sectional view of the fluid connector of figure 1 in an assembled state, engaged with the first hydraulic conduit.
- Figure 5A: is a schematic cross-sectional view of the fluid connector of figure 1 in an assembled state , shown with first and second hydraulic conduits.
- Figure 5B: is a schematic cross-sectional view of the fluid connector of figure 1 in a disassembled state with an alternative locking element, shown with first and second hydraulic conduits.
- Figure 6A: is a schematic cross-sectional view during the assembly of a fluid connector according to a second embodiment of the present invention.
- Figure 6B: is a schematic cross-sectional view of the fluid connector of figure 6B in an assembled state, shown with first and second hydraulic conduits.
- Figure 6C: is a schematic cross-sectional view during the assembly of a fluid connector according to an alternative form of the second embodiment of the present invention.
- Figure 6D: is a schematic cross-sectional view of the fluid connector of figure 6D in an assembled state, shown with first and second hydraulic conduits.
- Figure 7: is a schematic cross-sectional view of a fluid connector according to a third embodiment of the present invention in an assembled state, shown with first and second hydraulic conduits.
- Figures 8A & 8B: are schematic views of an alternative locking element with combined or integral locking teeth according to further embodiments.
- Figures 8C-8H: are schematic views of various alternative forms of locking teeth according to further embodiments.
- Figures 9A & 9B: are schematic views of an alternative locking element with combined or integral locking teeth according to further embodiments.
- Figures 10A & 10B: are schematic views of two alternative locking elements with combined or integral locking teeth according to further embodiments.
- Figure 11A: is a schematic cross-sectional view during the assembly of a fluid connector according to another embodiment of , shown with first and second hydraulic conduits..
- Figure 11B: is a schematic cross-sectional view of the fluid connector of figure 11A in an assembled state, shown with first and second hydraulic conduits, shown with first and second hydraulic conduits..
- Figure 12: is a schematic perspective view of the fluid connector of figure 11A in an assembled state, shown with first and second hydraulic conduits.
- Figure 13: is a schematic cross-sectional view of a fluid connector according to a further embodiment of the present invention, shown with first and second hydraulic conduits.

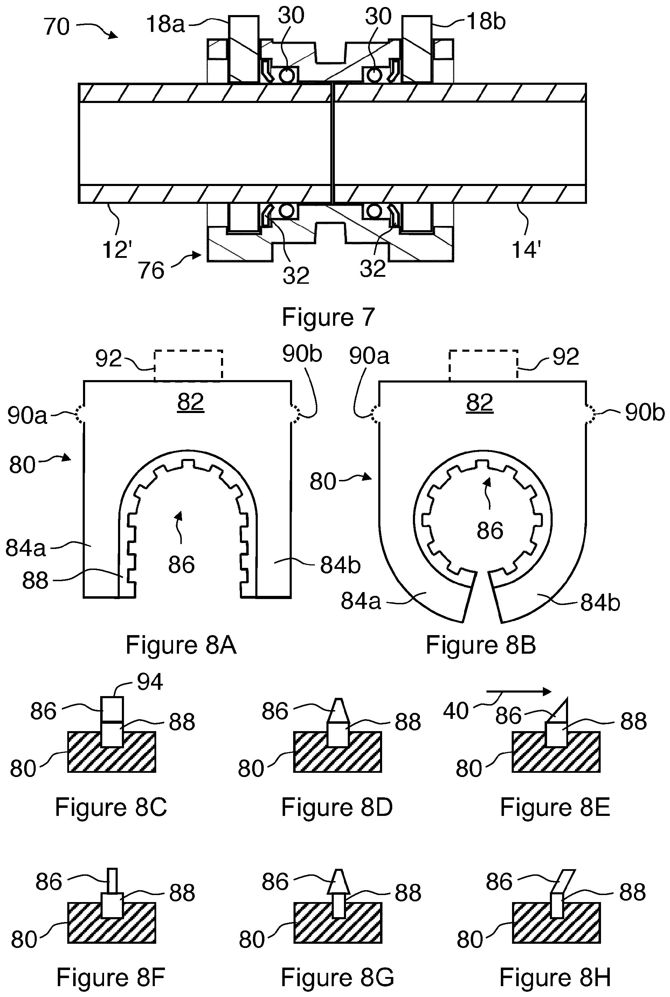

The embodiments of Figures 8A to 12 are illustrative, and are not covered by the subject-matter of the claims.

### Detailed Description

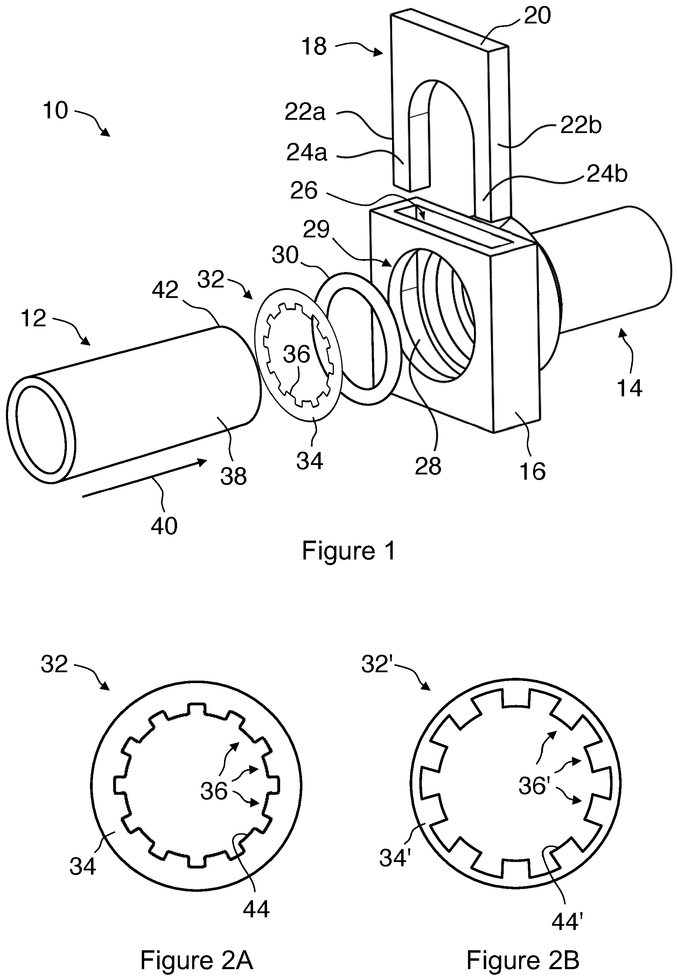

**Figure 1** is a schematic perspective exploded view of the fluid connector 10 according to a first exemplary embodiment of the invention, shown with two fluid conduits in the form of first and second hydraulic conduits 12, 14.

The fluid connector 10 includes a main body 16 and a locking element in the form of a clamp 18, which are depicted disengaged from one another. The clamp 18 includes a base 20 and two flexible engagement arms 22a, 22b (which, in this example, are generally parallel) extending from the base 20, arms 22a, 22b having respective distal ends 24a, 24b.

The body 16 defines a slot 26 for receiving and accommodating most or all of the clamp 18. Slot 26 is U-shaped, and is defined in part by curved, inner guiding surface 28 of the body 16. Body 16 also defines an aperture 29 for receiving first hydraulic conduit 10 into body 16. Inner guiding surface 28 is concave to first hydraulic conduit 10 when first hydraulic conduit 10 is located within body 16. Second hydraulic conduit 14 is integral with connector 10 (though in other embodiments may be detachably engaged therewith, such as threadedly), opposite aperture 29, such that-in use- first and second hydraulic conduits 12, 14 are in fluid communication via fluid connector 10.

In this embodiment, fluid connector 10 includes a radial seal in the form of O-ring 30 and an annular locking jaw 32 comprising an annular support 34 and a circuit of inwardly directed locking teeth 36; the locking teeth 36 are supported by and integral with annular support 34. O-ring 30 is sized to fit a cylindrical outer surface 38 of first hydraulic conduit 12, and-in use-to form a fluid-tight seal between an inner surface of body 16 and first hydraulic conduit 12.

Locking jaw 32, typically of metal or plastic, is configured to receive first hydraulic conduit 12, with locking teeth 36 sized such that their inner tips define a circle with a smaller diameter than the diameter of outer surface 38 of first hydraulic conduit 12. Thus, when-in use-first hydraulic conduit 12 is inserted into locking jaw 32 (or, equivalently, locking jaw 32 is pressed onto first hydraulic conduit 12), locking teeth 36 are deformed by first hydraulic conduit 12 in the direction of insertion of first hydraulic conduit 12 into locking jaw 32; locking teeth 36 thus become bent in the direction of insertion. The locking teeth 36 are at least somewhat resilient so, as a result, in this configuration they are urged by that resilience against outer surface 38 of first hydraulic conduit 12. This leads to an engagement between locking teeth 36 and outer surface 38, which can be effected by several mechanisms (as described below).

Fluid connector 10 can be assembled and attached to first hydraulic conduit 12 by inserting first hydraulic conduit 12 (in axial direction 40) into locking jaw 32 and O-ring 30, then locating the forward end 42 of first hydraulic conduit 12, locking jaw 32 and O-ring 30 through aperture 29 into body 16 (with locking jaw 32 and O-ring 30 located beyond inner guiding surface 28). Next, clamp 18 is driven in a substantially radial and substantially translational direction into slot 26, such that arms 22a, 22b straddle first hydraulic conduit 12 and, urged by engagement with inner guiding surface 28, contact and wrap around first hydraulic conduit 12. Locking jaw 32 is thus on the distal side of clamp 18, so locking jaw 32 cannot be removed from body 16 without first removing clamp 18. As a consequence, the engagement of locking jaw 32 and first hydraulic conduit 12 inhibits the withdrawal of first hydraulic conduit 12 from fluid connector 10 while clamp 18 remains in situ within body 16. This supplements the degree to which any frictional engagement of clamp 18 and first hydraulic conduit 12 inhibits the withdrawal of first hydraulic conduit 12 from fluid connector 10.

The degree to which the withdrawal of first hydraulic conduit 12 is inhibited by the engagement of locking jaw 32 and first hydraulic conduit 12 depends on the strength (i) of the engagement of locking jaw 32 and first hydraulic conduit 12, and (ii) of locking teeth 36.

The engagement of locking jaw 32 and first hydraulic conduit 12, and hence the strength of that engagement, can be controlled in several ways (e.g. selecting materials that provide a high mutual coefficient of friction). However, in this embodiment-in which it is envisaged that first hydraulic conduit 12 is in the form of a PVC pipe-the engagement is effected by providing locking teeth 36 that will dig into outer surface 38 of first hydraulic conduit 12, arising from the urging of locking teeth 36 into outer surface 38 when bent by the insertion of first hydraulic conduit 12 and the resilience of locking teeth 36. In addition, locking teeth 36, bent in this manner, are angled against the direction of withdrawal of first hydraulic conduit 12, so even a small degree of engagement between locking teeth 36 and first hydraulic conduit 12 will tend to straighten locking teeth 36 (that is, towards their initial configuration), thereby tending to decrease the diameter of the circle defined by the inner tips of locking teeth 36, hence increasing the force that locking teeth 36 apply to first hydraulic conduit 12 and therefore the force of that engagement.

As will be appreciated by those skilled in the art, locking teeth 36 (or the entirety of locking jaw 30) can be made of a material chosen according to application, based on the expected forces that locking teeth 36 are likely to be subjected to. In general, locking teeth 36 (or the entirety of locking jaw 30) are of a material that is harder than the material of the fluid conduit to be engaged. In some applications, therefore, locking jaw 30 (and hence locking teeth 36) are of a metal such as steel, as is the case in this embodiment. In other applications, however, it may be sufficient that locking jaw 30 (and hence locking teeth 36) be of a suitable plastic. From the above, however, it will be understood that locking teeth 36 are sufficiently strong so that they will not collapse (under compressive forces) or be sheared from annular support 34 if a withdrawal force is applied to first hydraulic conduit 12.

Furthermore, one or more additional locking jaws may be employed if still greater engagement with first hydraulic conduit 12 is desired, facilitated as necessary by adapting body 16 to accommodate the desired or expected number of locking jaws.

Fluid connector 10 thus operates-in its engagement with first hydraulic conduit 12-somewhat like a linear ratchet: first hydraulic conduit 12 can be advanced into locking jaw 32 (whether before or after the insertion of locking jaw 32 into body 16), but not readily withdrawn owing to the deformation of locking teeth 36 and their engagement with first hydraulic conduit 12. This engagement is principally due to the digging into the outer surface 38 of first hydraulic conduit 12 by locking teeth 36. However, that engagement can supplemented by, or replaced by, an alternative form of engagement between locking teeth 36 and outer surface 38. This and other embodiments of the fluid connector can be adapted for use with one or more fluid conduits that have recesses, or full or partial circumferential grooves, around their outer surfaces. Locking teeth 36, deformed by the insertion of a fluid conduit into the locking jaw of this and other embodiments, relax into these recesses or grooves, owing to their resilience, in a ratchet-like manner. Withdrawal of the fluid conduit from the locking teeth is thus inhibited by the mechanical engagement of the locking teeth with a surface of the recesses, groove or grooves. As mentioned, this can supplement or replace the engagement caused by the digging into the outer surface 38 of first hydraulic conduit 12 by locking teeth 36, so-in the latter scenario-may be especially advantageous with metal fluid conduits.

With this approach, however, the characteristics of locking jaw 32 may-in some applications-be advantageously modified. For example, the locking teeth may be of greater or lesser length than those shown in the embodiment of Figure 1, depending on the depth of the grooves. Also, the locking teeth 36 of Figure 1 may be adapted to dig or bite into outer surface 38 of first hydraulic conduit 12, but this may be unnecessary if outer surface 38 is provided with grooves. Additionally, in some embodiments of this kind, the locking teeth need not be harder than the fluid conduit, especially if the locking teeth are not required to dig into the fluid conduit.

**Figure 2A** is a view of locking jaw 32. In this example, locking jaw 32 has 12 teeth, each with circularly arcuate, inwardly directed tips 44; each of locking teeth 36 projects inwardly from annular support 34 by about 50% of the radial width of annular support 34. However, many other configurations and combinations of parameters are possible. **Figure 2B****,** for example, is a view of an alternative locking jaw 32' with ten locking teeth 36'. The tips 44' of locking teeth 36' are also circularly arcuate, but annular support 34' of locking jaw 32' is only about 45% the radial width of annular support 34 of locking jaw 36 of figure 2A, and each of locking teeth 36' projects inwardly from annular support 34' by about twice the radial width of annular support 34'.

In each alternative of this embodiment, however, locking jaw 32 is adapted to accommodate first hydraulic conduit 12 but only by bending locking teeth 36, and to be received by aperture 29 into body 16.

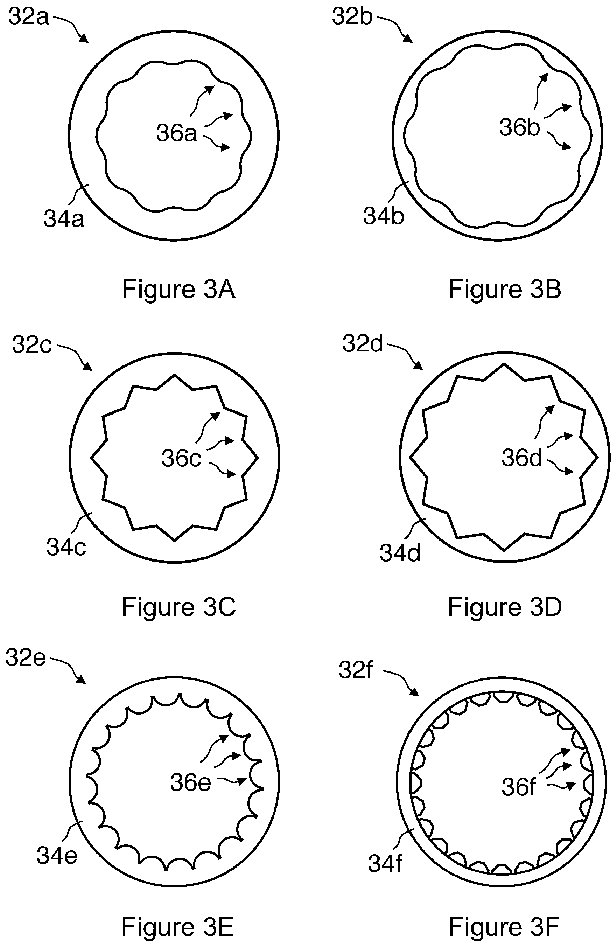

**Figures 3A to 3F** are views of further exemplary locking jaws 32a to 32f with annular supports 34a to 34f and locking teeth 36a to 36f, respectively. As is evident from these figures, locking teeth 36a to 36f can assume any suitable form, including wave-like or corrugated (cf. Figures 3A and 3B), which in some applications will facilitate disassembly, triangular (cf. Figures 3C and 3D), semi-circular (cf. Figure 3E) and essentially trapezoidal (cf. Figure 3F). As has also been seen in Figures 2A and 2B, annular supports 34a to 34f can also be of diverse radial widths.

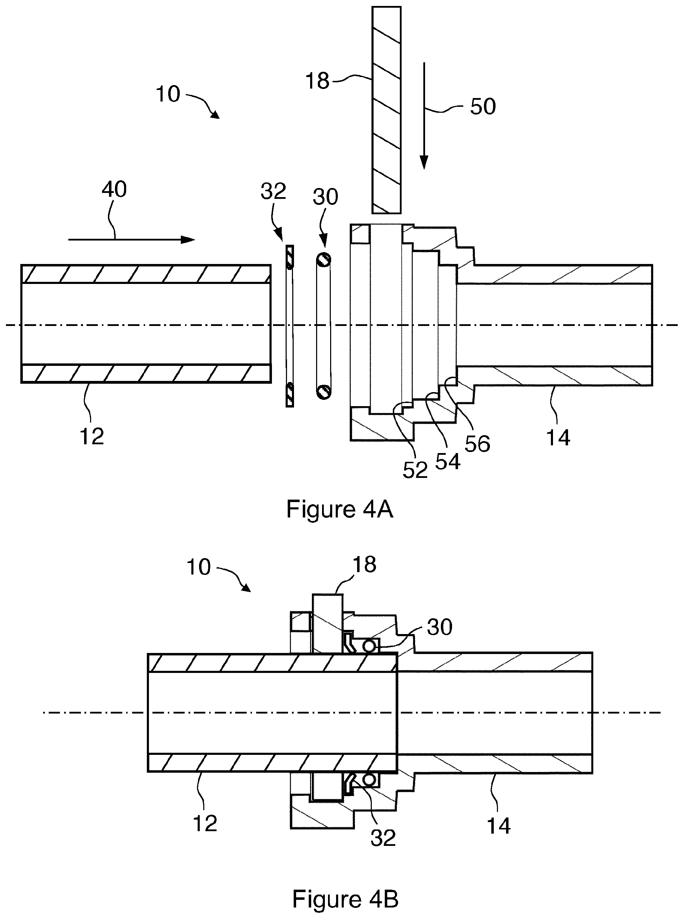

**Figure 4A** is a schematic cross-sectional view of fluid connector 10 before engagement of clamp 18, locking jaw 32 and body 16. As is apparent from this view, body 16 defines three internal shoulders or abutments of generally circular shape and successfully smaller diameter: a first shoulder 52 adapted to receive locking jaw 32, a second shoulder 54 adapted to receive O-ring 30, and a third shoulder 56 to define the maximum insertion of first hydraulic conduit 12. In this embodiment, third shoulder 56 is defined in part by second hydraulic conduit 14.

**Figure 4B** is a schematic cross-sectional view of fluid connector 10, with first hydraulic conduit 12, in an assembled state. During assembly, first hydraulic conduit 12 is inserted into locking jaw 32 then into O-ring 30, then advanced further in direction 40 into body 16 until abutting shoulder 56. (Alternatively, O-ring 30 and locking jaw 32 are first located within body 16, then first hydraulic conduit 12 is advanced in direction 40 into body 16 until abutting shoulder 56.) Next, clamp 18 is inserted into body 16 (via slot 26), such that engagement arms 22a, 22b contact inner guiding surface 28 of body 16. By providing a force in an inward and substantially radial direction on clamp 18, inner guiding surface 28 deforms engagement arms 22a, 22b in an inward and substantially tangential direction and urges them against first hydraulic conduit 10. By this deformation of engagement arms 22a, 22b, engagement arms 22a, 22b contact and at least partially surround outer surface 38 of first hydraulic conduit 10. Assembly is concluded when base 20 comes into contact with outer surface 38.

In this configuration, clamp 18 substantially surrounds first hydraulic conduit 10 and distal ends 24a, 24b of engagement arms 22a, 22b are substantially opposite each other. Locking teeth 36 are bent or deflected in direction 40 and dig into outer surface 38 of first hydraulic conduit 10. O-ring 30 provides a seal between outer surface 38 of first hydraulic conduit 10 and an internal surface of body 16.

Clamp 18 partially surrounds first hydraulic conduit 10, spanning an angle of approximately 340°. However, in variations of this embodiment (and also in some other embodiments), clamp 18 partially surrounds the first hydraulic conduit 10 by an angle ranging between 300° and 350°, such as between 310° and 340° and in particular between 320° and 330°. In some variations, the clamp 18 fully surrounds the first hydraulic conduit (i.e. spans substantially 360°).

It will be noted that first hydraulic conduit 12 is held in the correct axial alignment within connector 10 by an internal cylindrical surface defined by body 16. This alignment is augmented by locking element 18 and by locking jaw 32, though any one of these three mechanisms would serve this purpose. Furthermore, locking element 18 retains locking jaw 32 in fluid connector 10 is this assembled configuration (or at least resists its removal from connector 10); as a result, the engagement of locking teeth 36 and first hydraulic conduit 12 causes first hydraulic conduit 12 also to be retained by fluid connector 10.

It will also be noted that, in this example, base 20 of clamp 18 partially protrudes from body 16 in the assembled state. This facilitates the withdrawal of the clamp 18, if required. Alternatively, however, clamp 18 can be sized so that base 20 does not protrude from body 16 in an assembled configuration.

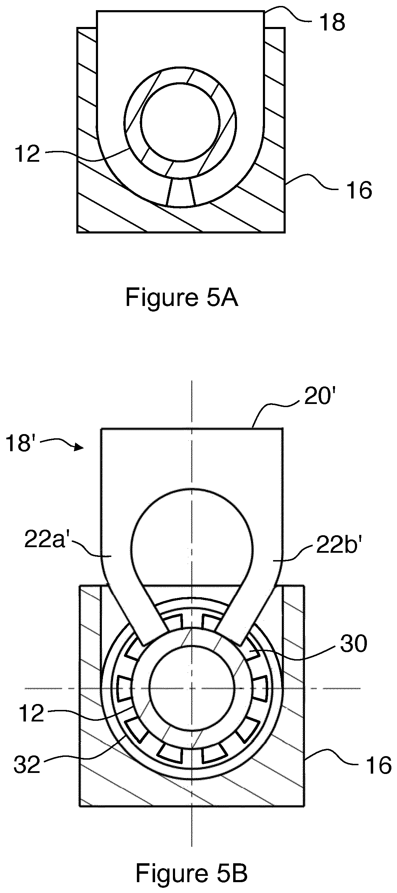

**Figure 5A** is a schematic cross-sectional view of fluid connector 10 of figure 1 and first hydraulic conduit 12, through a central plane of clamp 18, in an assembled configuration. As can be seen, engagement arms 22a, 22b are urged around and against first hydraulic conduit 12, and clamp 18-in particular its base 20-protrudes from slot 26 of body 16.

**Figure 5B** is a schematic front view of fluid connector 10, including an alternative clamp 18', with clamp 18' only partially inserted into slot 26. Engagement arms 22a', 22b' of clamp 18' are pre-shaped (as shown) such that they converge in their relaxed configuration, lending clamp 18' a horseshoe shape (cf. engagement arms 22a, 22b of the embodiment of Figure 1, which are essentially parallel in their relaxed position). As a consequence, engagement arms 22a', 22b' are first separated by engagement with first hydraulic conduit 12 when inserted into slot 26 but, once fully located in slot 26 and at least partially surrounding first hydraulic conduit 10, they have a final deformation that is less than that of engagement arms 22a, 22b in their fully assembled configuration. This causes a lower strain load on engagement arms 22a', 22b' than on engagement arms 22a, 22b of Figure 1 in their respective fully assembled configurations.

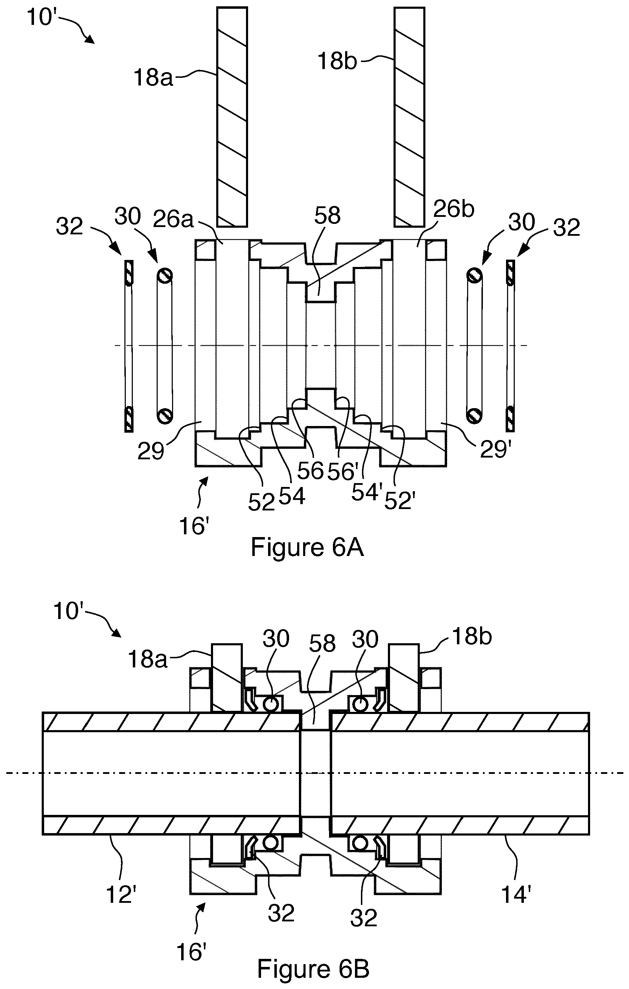

**Figure 6A** is a schematic cross-sectional view of a fluid connector 10', which includes a main body 16', according to a further embodiment of the present invention and shown in a disassembled configuration. In this embodiment, neither fluid conduit is integral with body 16' of the connector: fluid connector 10' is configured to disengagably connect first and second hydraulic conduits 12', 14'. The connector 10' of this embodiment has two locking elements in the form of first and second clamps 18a,18b, while body 16' defines two slots 26,26' configured to receive respective clamps 18a,18b. Clamps 18a,18b are comparable to clamp 18 of the embodiment of Figure 1 or clamp 18' of Figure 5B. Likewise, fluid connector 10' has two O-rings 30 and two locking jaws 32, and body 16' defines two opposed apertures 29, 29' for receiving the ends respectively of first hydraulic conduit 12' and second hydraulic conduit 14'. Locking elements 18a,18b, once disposed in slots 26, 26', partially surround the respective conduits 12', 14' (by, for example, approximately 340°-as is the case in the embodiment of Figure 1).

Body 16' of fluid connector 10', like that of fluid connector 10 of Figure 1, defines a first set of three internal shoulders 52, 54, 56, but additionally defines a comparable second set of three internal shoulders 52', 54', 56'. First shoulders 52,52' are adapted to abut the respective locking jaws 32, second shoulders 54,54' to abut respective O-rings 30, and third shoulders 56,56' to define the maximum insertion of first and second hydraulic conduits 12', 14'. Third shoulders 56,56', it will be noted, are defined by opposite faces of an inwardly directed circular flange 58.

In this embodiment, each of first and second hydraulic conduits 12', 14' is provided with a seal (in the form of O-rings 30), but in practice only one such seal may be required in some applications (and indeed none in others), depending on, for example, the nature and pressure of the fluid.

**Figure 6B** is a schematic cross-sectional view of fluid connector 10' of Figure 6A, with first and second hydraulic conduits 12', 14', shown in an assembled configuration. First and second hydraulic conduits 12', 14' are held in the correct axial alignment within connector 10' by internal cylindrical surfaces defined by body 16'. This alignment is augmented by locking elements 18a, 18b and by locking jaws 32.

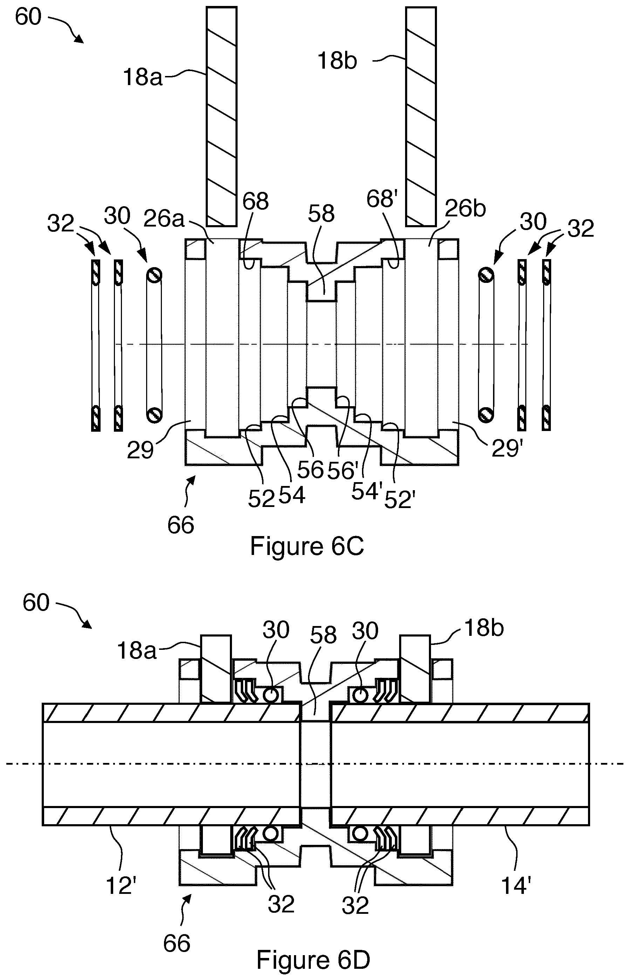

**Figure 6C and 6D** are views, comparable to Figures 6A and 6B respectively, of a fluid connector 60 according to an alternative form of the embodiment of Figures 6A and 6B. Fluid connector 60 has a body 66 that is identical in most respects with body 16' of fluid connector 10' of Figures 6A and 6B.

However, body 66 is configured to accommodate two locking jaws for engaging each of first and second hydraulic conduits 12', 14'. Thus, fluid connector 60 includes four locking jaws 32, a first pair for engaging first hydraulic conduit 12' and a second pair for engaging second hydraulic conduit 14'. The internal cylindrical surfaces 68, 68' defined by body 66, and which respectively accommodate the first and second pairs of locking jaws 32, are longer in an axial direction than their counterparts in fluid connector 10' of Figures 6A and 6B, so that each can accommodate a pair of locking jaws 32, rather than a single locking jaw (cf. fluid connector 10' of Figures 6A and 6B).

Consequently, fluid connector 60 includes two sets of inwardly directed locking teeth configured to be disposed at and engage first hydraulic conduit 12' and two sets of inwardly directed locking teeth configured to be disposed at and engage second hydraulic conduit 14'. This provides for stronger engagement with the respective hydraulic conduits 12', 14' (an approach that can be employed in each of the other embodiments disclosed herein). It will also be appreciated that greater numbers of locking jaws can likewise be employed if still stronger engagement is desired (in fluid connector 60 and in the other disclosed embodiments).

The use of two or more sets of inwardly directed locking teeth per hydraulic conduit has a number of advantages. A greater force can be exerted on the respective hydraulic conduits 12', 14' (to resist their undesired removal from fluid connector 60) by the locking teeth without requiring a greater force of engagement of any individual locking tooth with a hydraulic conduit, thus avoiding having to dig deeper into the hydraulic conduit or form the locking teeth from a stronger material. In addition, the engagement of the locking teeth and a hydraulic conduit is distributed over a greater area of the outer surface of that hydraulic conduit, thereby reducing the risk of undue damage to that outer surface.

**Figure 7** is a schematic cross-sectional view of a fluid connector 70 according to a still further embodiment of the present invention, shown assembled with first and second hydraulic conduits 12', 14'. Fluid connector 70 of this embodiment is largely identical with fluid connector 10' of the embodiment of Figures 6A and 6B, except that main body 76 of this connector omits an inwardly directed circular flange (cf. flange 58 of Figures 6A and 6B) to define third shoulders or abutments. Instead, first and second hydraulic conduits 12', 14' abut each other and thereby define their maximum insertion distances.

It will be noted that, in the embodiments of Figures 1 to 7, the various locking jaws (including locking teeth) are provided as discrete integers. However, it is also possible to provide locking teeth (e.g. locking teeth 36) as integral with or fast with a locking element (e.g. clamp 18). For example, the teeth can be manufactured as a component of the locking element. This can be done, for example, with multi-component injection moulding, or by providing the locking element with a metal insert (comprising the locking jaw). In such arrangements in which locking jaw or locking teeth are fast with (e.g. partially embedded in) the locking element, the locking jaw or locking teeth are typically of metal embedded in a plastic locking element.

The jaw or locking teeth can be assembled to the locking element , or manufactured as a single part in which the jaw is, or the locking jaw or locking teeth are, an integral part of the locking element.

In yet a further arrangement, the jaw or locking teeth can be integral with or fast with body 16 of fluid connector 10 (or of the body of other fluid connectors of the invention). Such embodiments generally resemble the configurations shown in, for example, Figures 4B, 6B and 7, except that the locking jaw or locking teeth integral or fast with (e.g. embedded in) the body of the fluid connector.

These embodiments may be not adapted for reuse as, once a fluid conduit has been inserted into the fluid connector, it may not be possible to remove it without damaging the fluid connector. In such cases, the body components may be engaged with any suitable connection, including a material connection (such as welding or gluing).

However, in some embodiments, the body of the fluid connector is provided as two or more components that can be detachably engaged (e.g. with bolts, latches or screw connections) before inserting the fluid conduit, and disengaged when it is desired to remove the fluid conduit. For example, the body may be provided as two half-shells. These may be bolted together, or connected in a hinge-like manner (such as with a film hinge), in order to facilitate assembly and disassembly.

**Figures 8A and 8B** illustrate an example of such a configuration, and are schematic views of a clamp 80, including a base 82 (from which extend engagements arms 84a,84b) and locking teeth 88 arranged in an internal arch configuration. Figure 8A shows clamp 80 in its relaxed configuration (cf. clamp 18 as shown in Figure 1), while Figure 8B shows clamp 80 in its deformed or in-use configuration (cf. clamp 18 as shown in Figure 5A), in which locking teeth 88 assume a more circular configuration. Clamp 80 includes a support 88 that supports locking teeth 86; support 88 is either integral with or embedded in engagements arms 84a,84b.

**Figure 8C** is a schematic partial cross-sectional view of clamp 82 (not to scale), for the example in which support 88 is partially embedded in engagements arms 84a,84b. Locking tooth 86 is shown with a tip 92 that is blunt in cross section. In practice, each locking tooth 86 and tip 92 can be of any suitable profile, adapted according to application so as to sufficiently engage first hydraulic conduit 12, 12'. **Figure 8D****,** for example, illustrates an alternative in which locking tooth 86 has a symmetrical but generally trapezoidal cross section, such that locking tooth 86 is more toothlike. **Figure 8E** illustrates an alternative in which locking tooth 86 has a generally triangular cross section, such as to facilitate insertion of first hydraulic conduit 12, 12' in direction 40.

In addition, the thickness of the locking teeth need not be equal to that of the support. **Figure 8F** illustrates an alternative in which locking tooth 86 is thinner than support 88, and **Figure 8G** illustrates an alternative in which support 88 is thinner than in the other examples, and locking tooth 86 is comparable in thickness and cross section to the locking tooth of Figure 8D. Furthermore, the locking teeth need not be oriented perpendicularly to the support. **Figure 8G** illustrates an alternative in which support 88 is arranged perpendicularly to locking element 80 (whether at one of engagement arms 84a,84b or base 82), but locking tooth 86 is angled relative to the vertical (in this view) by approximately 27°-whether to facilitate insertion of first hydraulic conduit 12, 12' or to modify the degree of engagement between locking tooth 86 and first hydraulic conduit 12, 12'.

It is emphasized that these variations in locking tooth cross section, size and orientation may be combined as desired, and may be employed in any other embodiments of the invention, including in those embodiments in which the locking teeth and support are provided as a discreet locking jaw (cf. Figures 2A to 3F), in which the locking teeth and support are integral or fast with the locking element (cf. Figures 8A and 8B) and in which the locking element constitutes the support (see below).

Locking elements of this invention may optionally include a connection mechanism for releasably connecting the locking element to the fluid connector. Referring to Figures 8A and 8B, such a connection mechanism may be provided in the form of an optional one or more convex snap-lock elements 90a, 90b, adapted to engage complementary concave snap-lock elements (not shown) in the inner guiding surface of main bodies 16, 16', 76 (e.g. guiding surface 28 of fluid connector 10).

Locking elements of this invention may also or alternatively optionally have a handle, particularly to facilitate withdrawal of the clamp from the body of a fluid connector during disassembly. In clamp 80, this handle is provided in the form of optional upwardly extending knob 92. Locking elements of this invention may include other optional features not depicted in these figures. For example, the optional handle (e.g. handle 92) may include at its base a predetermined breaking point or neck. The handle enables easy handling of the locking element during the assembly of the fluid connector, but the handle can be broken off after assembly at the predetermined breaking point so that the fluid connector occupies less space.

Locking elements of this invention may include aa mechanism to protect against the loss of the locking element when disengaged from the fluid connector, such as a flexible strap. For example, the strap may be integral with the locking element. The strap is made fast to the body of the fluid connector during manufacture.

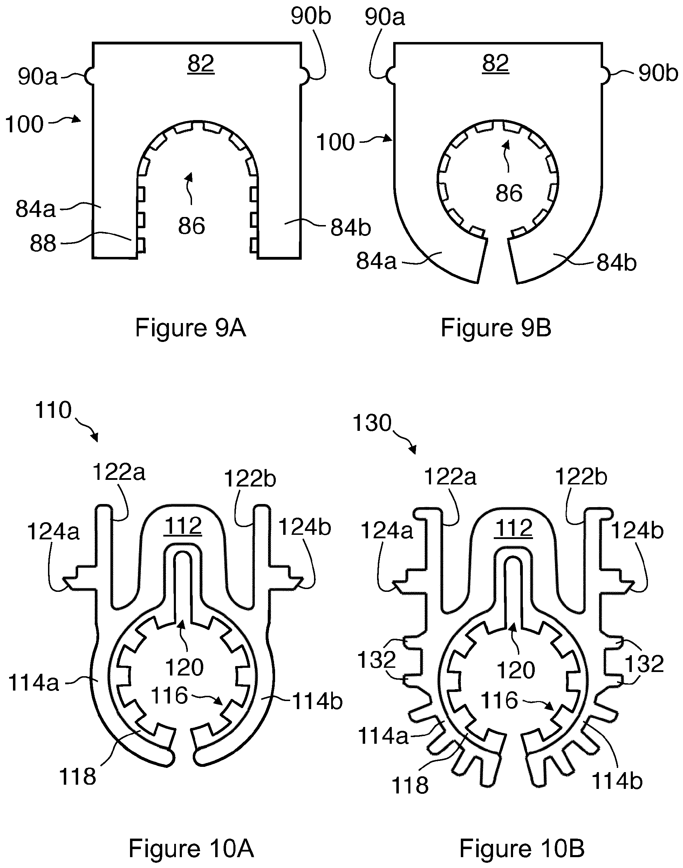

**Figures 9A and 9B** are schematic front views of a further embodiment of the locking element. In this embodiment, the locking element is in the form of a clamp 100 (shown with optional convex snap-lock elements 90a,90b). Clamp 100 is similar to clamp 80 of Figures 8A and 8B, and like reference numerals have been used to identify like features. However, the support for locking teeth 86 is, in this embodiment, provided either by engagement arms 84a, 84b or is fully embedded within engagement arms 84a, 84b (cf. Figure 8C) so not visible in this view.

**Figures 10A and 10B** are schematic front views of two further embodiments of the locking element. These views can represent locking elements either in assembled configuration (cf. Figure 8B) or locking elements that are pre-shaped such that their engagement arms converge-as shown-also in their relaxed configuration (cf. Figure 5B).

Thus, Figure 10A is a schematic front view of a locking element in the form of clamp 110. Clamp 110 includes base 112, engagement arms 114a, 114b, locking teeth 116 and a support 118 for locking teeth 116. Base 112 is elongated vertically (in this view), thereby providing greater flexibility and doubling as a handle (cf. optional handle 92 of clamp 80 of Figures 8A and 8B). Base 112 also defines a vertical slot 120 and, as support 118 is of generally constant width, support 118 a correspondingly defines a slot.

Clamp 110 also includes to release levers 122a, 122b extending upwardly from respective engagement arms 114a, 114b and located on either side of base 112. Release levers 122a, 122b are in turn provided with outwardly directed snap-lock elements 124a, 124b. Snap-lock elements 124a, 124b are configured to be received by complementary recesses defined the inner guiding surface (cf. inner guiding surface 28 of Figure 1) of the main body of the fluid connector. Release levers 122a, 122b facilitate the release of snap-lock engagement between snap-lock elements 124a, 124b and these recesses, which is effected by urging release levers 122a, 122b towards one another.

Figure 10B is a schematic front view of a locking element in the form of clamp 130. Clamp 130 is similar in most respects to clamp 110 of Figure 10A, and like reference numerals have been used to identify like features. In addition, however, engagement arms 114a, 114b of clamp 130 include a plurality of outwardly directed positioning arms 132 for supporting clamp 130 in the correct-or approximately correct-position within the body (e.g. body 16 or 16') of the fluid connector. Positioning arms 132 allow engagement arms 114a, 114b to be generally thinner (and therefore more flexible), owing to what amounts to notches in engagement arms 114a, 114b defined by and between each adjacent pair of positioning arms 132. As illustrated, each of engagement arms 114a, 114b has six such positioning arms 132, but other numbers are also possible; however, sufficient arms should be employed to hold clamp 130 at least approximately correctly positioned within the fluid connector, that is, supporting the first and/or second hydraulic conduit in approximately the correct axial alignment.

Both clamp 110 and clamp 130 are predominantly of a plastic material, such polypropylene, with the support 118 and locking teeth 116 of a material-such as metal or a plastic-that is harder than the hydraulic conduit(s) with which the clamps are configured to be used. This includes configurations in which the clamp 110, 130, support 118 and locking teeth 116 are of the same material (whether manufactured integrally or with some assembly). For example, when the clamp 110, 130 is to be used with a hydraulic conduit of polyethylene, clamp 110, 130, support 118 and locking teeth 116 may be manufactured of polyamide, which has a higher hardness and stiffness than polythylene.

Comparable observations also apply to other embodiments in which the locking element constitutes or comprises the support for the locking teeth, including those described above by reference to Figures 8A, 8B, 9A and 9B.

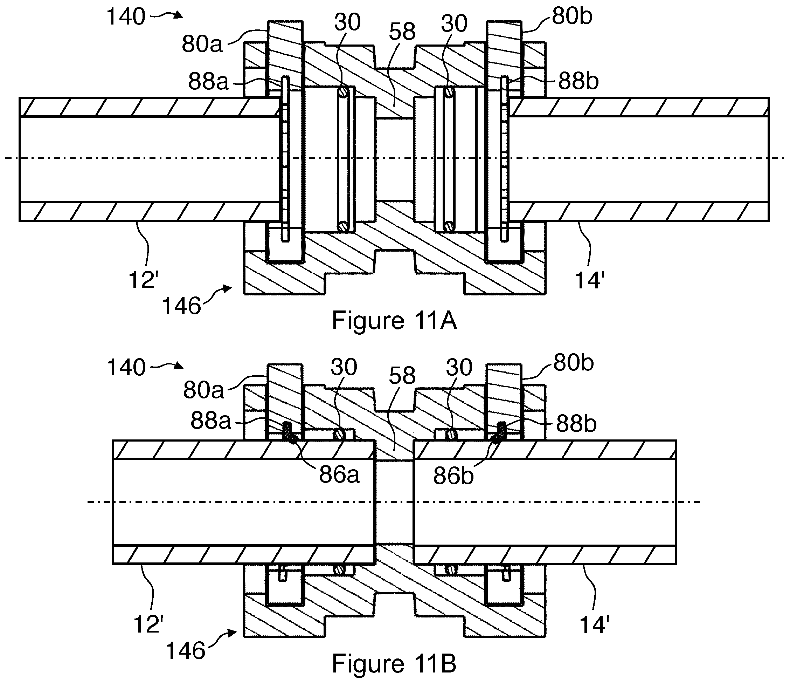

**Figures 11A and 11B** are schematic cross-sectional views of a fluid connector 140 in a semi- and fully-assembled configurations, respectively. Fluid connector 140 is comparable to fluid connector 10' of figures 6A and 6B, so like reference numerals have been used to indicate like features. However, the main body 146 of fluid connector 140 omits first shoulder 52, as that shoulder is provided to receive a separate locking jaw. Furthermore, fluid connector 140 includes first and second locking elements in the form of first and second clamps 80a, 80b, each comparable to clamp 80 of figures 8A and 8B and its variations.

Referring to Figure 11A, fluid connector 140 is shown semi-assembled, that is, with clamps 80a, 80b disposed within body 16' of fluid connector 140 but with first and second hydraulic conduits 12', 14' inserted into body 16' only to the point of making contact with respective sets of locking teeth 86a, 86b though not yet deforming them.

Figure 11B shows fluid connector 140 fully assembled. Owing to the further insert of first and second hydraulic conduits 12', 14' (until abutting flange 58), locking teeth 86a, 86b have been deformed in the respective directions of insertion of first and second hydraulic conduits 12', 14'. Locking teeth 86a, 86b are digging into first and second hydraulic conduits 12', 14', respectively, but are in turn retained within connector 140 by being integral or fast with clamps 80a, 80b. Hence, locking teeth 86a, 86b will resist the removal of first and second hydraulic conduits 12', 14' from fluid connector 140 unless clamps 80a, 80b are first removed from body 16'.

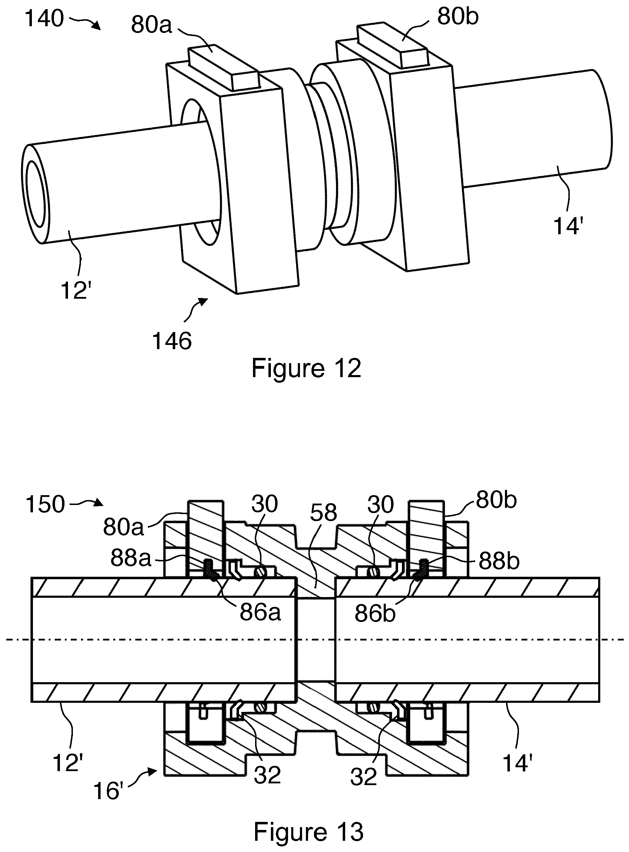

**Figure 12** is a perspective view of fluid connector 140 fully assembled, detachably engaged to first and second hydraulic conduits 12', 14'.

The technique of providing locking element and locking teeth as separate integers (cf. fluid connector 10 of Figure 1 and 10' of Figure 6A) and the technique of providing locking element and locking teeth as combined or integral integers (cf. fluid connector 140 of Figure 11A) can be combined, such that two (or more) sets of locking teeth are employed. Typically, this would involve an arrange comparable to that shown in Figures 1, 6A or 7, but using one or more locking elements of the type that are combined or integral with a set of locking teeth (e.g. locking elements 80, 100, 110 and 130 of Figures 8A, 9A, 10A and 10B, respectively). This approach increases the engagement between the fluid conduit or conduits and the fluid connector, which may be further increased by providing fluid conduit or conduits with circumferential grooves.

**Figure 13** illustrates an embodiment with this dual approach. Figure 13 is a schematic cross-sectional view, comparable to that of Figure 6B, of a fluid connector 150 that is generally identical with fluid connector 10' of Figures 6A and 6B, and includes a body 16' that is identical with that of fluid connector 10'. However, fluid connector 150 differs from fluid connector 10' in that its first and second locking elements are in the form of first and second clamps 80a, 80b, which are identical with clamps 80a, 80b of Figures 11A and 11B. As a consequence, fluid connector 150 has four sets of locking teeth: the locking teeth of a first locking jaw 32 and locking teeth 86a engaging first hydraulic conduit 12', and the locking teeth of a second locking jaw 32 and locking teeth 86b engaging second hydraulic conduit 14'.

Locking teeth 86a, 86b are digging into first and second hydraulic conduits 12', 14', respectively, but are in turn retained within connector 150 by being integral or fast with clamps 80a, 80b. Hence, locking teeth 86a, 86b will resist the removal of first and second hydraulic conduits 12', 14' from fluid connector 150 unless clamps 80a, 80b are first removed from body 16'. Likewise, locking elements 80a, 80b retain locking jaws 32 in fluid connector 150 is this assembled configuration (or at least resists their removal from connector 150); as a result, the engagement of locking teeth 86a, 86b and first and second hydraulic conduits 12', 14', respectively, cause first and second hydraulic conduits 12', 14' also to be retained by fluid connector 150.

Finally, it will be appreciated that many of the various individual features of each of the above embodiments of the invention, and of the various individual features of the embodiments described herein including in the claims, can be combined as suitable and desired. For example, the various locking teeth shapes and cross sections, described by reference to figures 2A to 3F and 8C to 8H, may be employed with any embodiment of the invention, and in particular with any of the illustrated embodiments.

It should be understood that the reference to prior art in this specification is not, and should not be taken as, an acknowledgement or any form of suggestion that the prior art forms part of the common general knowledge in any country.

In the claims that follow and in the preceding description of the invention, except where the context requires otherwise due to express language or necessary implication, the word "comprise" or variations such as "comprises" or "comprising" is used in an inclusive sense, i.e. to specify the presence of the stated features but not to preclude the presence or addition of further features in various embodiments of the invention.

### Reference Numerals

- 10, 10': connector
- 12, 12': first hydraulic conduit
- 14, 14': second hydraulic conduit
- 16, 16': body of the connector
- 18, 18a, 18b: locking element
- 20, 20': base of locking element
- 22a, 22b, 22a', 22b': engagement arms of locking element
- 24a, 24b: forward ends of engagement arms
- 26, 26a, 26b: slot in body of connector for receiving locking element
- 28: internal guiding surface of body
- 29: aperture in body for receiving first hydraulic conduit
- 30: O-ring
- 32, 32', 32a-32f: locking jaw
- 34, 34', 34a-34f: support for locking teeth
- 36, 36', 36a-36f: locking teeth
- 38: outer surface of first hydraulic conduit
- 40: direction of insertion of first hydraulic conduit
- 42: forward end of first hydraulic conduit
- 44: tips of locking teeth
- 50: direction of insertion of locking element
- 52, 52', 54, 54', 56, 56': internal shoulders of body of connector
- 58: internal flange of connector
- 60,70: connector
- 66, 76: body of the connector
- 80, 80a, 80b: locking element
- 82: base of locking element
- 84a, 84b: engagement arms of locking element
- 86, 86a, 86b: locking teeth
- 88, 88a, 88b: support for locking teeth
- 90a, 90b: snap-lock elements of locking element
- 92: handle of locking element
- 100,110: locking element
- 112: base of locking element
- 114a, 114b: engagement arms of locking element
- 116: locking teeth
- 118: support for locking teeth
- 120: slot in locking element
- 122a, 122b: release levers
- 124a, 124b: snap-lock elements of locking element
- 130: locking element
- 140: connector
- 146: body of the connector
- 150: connector

## Claims

1. A connector for forming a fluid connection between at least a first fluid conduit (12; 12') and a second fluid conduit (14; 14'), the connector (10; 10'; 60; 70; 150) comprising:
a body (16; 16'; 66; 76) defining at least one aperture configured to receive an end (42) of the first fluid conduit (12; 12');
a locking element (18; 18'; 18a,18b) comprising a pair of flexible engagement arms (22a,22b; 22a',22b') extending therefrom, the engagement arms (22a,22b; 22a',22b') being configured so as to accommodate the end of the first fluid conduit (12; 12') therebetween;
the locking element (18; 18'; 18a,18b) being configured to be at least partially received by a slot (26; 26a,26b) defined by the body (16; 16'; 66; 76) and, when the end of the first fluid conduit (12; 12') is located within the body (16; 16'; 66; 76) of the connector (10; 10'; 60; 70; 150), to engage the first fluid conduit (12; 12');
the engagement arms (22a, 22b) are configured to be urged tangentially by an internal surface of the slot (26; 26a,26b) towards the first fluid conduit (12; 12'); and
when the locking element (18; 18'; 18a,18b) is located in the slot (26; 26a,26b) and the end of the first fluid conduit (12; 12') is located in the body (16; 16'; 66; 76) of the connector (10; 10'; 60; 70; 150), the engagement arms (22a, 22b) are retained against the first fluid conduit (12; 12') and have respective lengths such that the locking element (18; 18'; 18a,18b) at least partially surrounds the first fluid conduit (12; 12'); and
the connector (10; 10'; 60; 70; 150) comprises one or more sets of inwardly directed locking teeth (36; 36'; 36a-f; 86) configured to be disposed at an outer surface (38) of the first fluid conduit (12; 12') with the locking teeth engaging the outer surface (38) when the connector (10; 10'; 60; 70; 150) is assembled and the end (42) of the first fluid conduit (12; 12') is located in the body (16; 16'; 66; 76); and
the connector (10; 10'; 60; 70; 150) comprises a support (34; 34'; 34a-f) configured to support the locking teeth against the first fluid conduit (12; 12') when the end (42) of the first fluid conduit (12; 12') is located in the body (16; 16'; 66; 76);
wherein the locking teeth (36; 36'; 36a-f; 86) are configured so as to be deformed by the first fluid conduit (12; 12') upon engagement of the first fluid conduit (12; 12') and the locking teeth, wherein the locking teeth resist disengagement by reversal of the engagement;
the support (34; 34'; 34a-f) is adjacent to the locking element (18; 18'; 18a,18b) when the connector (10; 10'; 60; 70; 150) is assembled, such that the locking element (18; 18';
18a,18b) retains the locking teeth in the connector (10; 10'; 70) when the connector (10; 10'; 60; 70; 150) is assembled;
the locking element (18; 18'; 18a,18b) is configured to in use at least partially surround the first fluid conduit (12; 12') in a span of at least 200°; and
the slot (26; 26a,26b) is defined in part by an internal surface (28) of the body (16; 16'; 66; 76) configured to maintain the engagement arms (22a, 22b; 22a', 22b') in position against the first fluid conduit (12; 12').

2. A connector as claimed in claim 1, wherein the connector is configured for use with a first fluid conduit of circular cross section, and the locking teeth (36; 36'; 36a-f; 86) have tips (44; 44') that define a circle or a circular arc of smaller radius than a radius of the first fluid conduit (12; 12') so that the locking teeth (36; 36'; 36a-f; 86) are deformed by the first fluid conduit (12; 12') upon engagement of the first fluid conduit (12; 12') and the locking teeth.

3. A connector as claimed in either claim 1 or 2, wherein the support (34; 34'; 34a-f) comprises an engagement ring or clip that is integral with the locking teeth, and is adapted to be disposed beside the locking element when the connector is assembled such that the engagement ring or clip abuts the locking element.

4. A connector as claimed in claim 3, wherein the locking element (80a, 80b) comprises or constitutes a second support and comprises a second set of locking teeth (86a, 86b).

5. A connector as claimed in any one of the preceding claims, wherein the locking teeth (36; 36'; 36a-f; 86) are configured to be received by one or more grooves or recesses in the outer surface (38) of the first fluid conduit (12; 12').

6. A connector as claimed in any one of the preceding claims, wherein the locking teeth, or the locking teeth and the support, are of a material selected to be harder than the first fluid conduit (12; 12').

7. A connector as claimed in any one of the preceding claims, wherein the locking teeth (36; 36'; 86) are configured to in use at least partially surround the first fluid conduit (12; 12') in a span of at least 200°, at least 250°, at least 270°, at least 300°, at least 320°, at least 330°, at least 340°, at least 350° or between 350° and 355°, or approximately 360°.

8. A connector according to any one of the preceding claims, wherein the locking element (18; 18'; 18a,18b) is configured to in use at least partially surround the first fluid conduit (12; 12') in a span of at least 250°, at least 270°, at least 300°, at least 320°, at least 330°, at least 340°, or between 340° to 350° (inclusive) or between 350° to 355° (inclusive), or between 355° to 360° (inclusive).

9. A connector according to any one of the preceding claims, wherein the engagement arms (22a', 22b') are resilient and configured to be spread when inserted into the slot (26; 26a,26b) by the first fluid conduit (12; 12') and to assume a configuration once located in the slot (26; 26a,26b) such that the engagement arms (22a', 22b') contact the first fluid conduit (12; 12').

10. A connector as claimed in any one of the preceding claims, wherein the locking teeth are of a material or materials selected:
to be either softer than, or comparable in hardness to, the first fluid conduit; and/or
to provide a high coefficient of friction between the locking teeth and the first fluid conduit.

11. A connector as claimed in any one of the preceding claims, in an at least partially assembled form, wherein the locking element (18; 18'; 18a,18b) or the set of locking teeth (36; 36'; 36a-f; 86) is, or both the locking element (18; 18'; 18a,18b) and the set of locking teeth (36; 36'; 36a-f; 86) are, located in the body (16; 16'; 66; 76).

12. A connector as claimed in any one of the preceding claims, further comprising
a further locking element (18b) comprising a pair of flexible engagement arms extending therefrom and configured to accommodate the second fluid conduit (14') therebetween,
wherein the body (16'; 66; 76) of the connector (10'; 70) defines a further aperture (29') configured to receive an end of the second fluid conduit (14'), and a further slot (26b) configured to receive a further locking element (18b) for engaging the second fluid conduit (14');
the further locking element (18b) is configured to be at least partially received by the further slot (26b) and, when the end of the second fluid conduit (14') is located within the body (16'; 66; 76) of the connector (10'; 60; 70; 150), to engage the end of the second fluid conduit (14'), the engagement arms of the further locking element (18b) being configured to be urged tangentially by an internal surface of the further slot (26b) towards the end of the second fluid conduit (14'); and
when the further locking element (18b; 80b) is located in the further slot (26b) and the end of the second fluid conduit (14') is located in the body (16'; 66; 76) of the connector (10'; 70), the engagement arms of the further locking element (18b; 80b) are retained against the second fluid conduit (14') and have respective lengths such that the further locking element (18b) at least partially surrounds the second fluid conduit (14'); and
the connector (10'; 60; 70; 150) comprises one or more sets of inwardly directed locking teeth (36; 86b) configured to be disposed at an outer surface of the second fluid conduit (14') with the further set of locking teeth (36; 86b) engaging the outer surface of the second fluid conduit (14') when the connector (10'; 60; 70; 150) is assembled and the end of the second fluid conduit (14') is located in the body (16'; 66; 76); and
the connector (10'; 60; 70; 150) comprises a further support configured to support the further set of locking teeth against the second fluid conduit (14') when the end of the second fluid conduit (14') is located in the body (16'; 66; 76);
wherein the further set of locking teeth (36; 86b) are configured so as to be deformed by the second fluid conduit (14') upon engagement of the second fluid conduit (14') and the further set of locking teeth (36; 86b) wherein the further set of locking teeth (36; 86b) resist disengagement by reversal of the engagement; and
the second support is integral with, connected to or adjacent to the further locking element (18b; 80b) when the connector is assembled, such that the further locking element (18b; 80b) retains the further set of locking teeth (36; 86b) in the connector (10'; 60; 70; 150) when the connector (10'; 60; 70; 150) is assembled.

## Patentansprüche

1. Verbinder zum Ausbilden einer Fluidverbindung zwischen mindestens einer ersten Fluidleitung (12; 12') und einer zweiten Fluidleitung (14; 14'), wobei der Verbinder (10; 10'; 60; 70; 150) Folgendes umfasst:
einen Körper (16; 16'; 66; 76), der mindestens eine Öffnung, ausgebildet zum Aufnehmen eines Endes (42) der ersten Fluidleitung (12; 12'), definiert;
ein Verriegelungselement (18; 18'; 18a, 18b), umfassend ein Paar flexibler, sich davon erstreckender Eingriffsarme (22a, 22b; 22a', 22b'), wobei die Eingriffsarme (22a, 22b; 22a', 22b') so ausgestaltet sind, dass sie das Ende der ersten Fluidleitung (12; 12') dazwischen aufnehmen;
wobei das Verriegelungselement (18; 18'; 18a,18b) dazu ausgestaltet ist, mindestens teilweise von einem durch den Körper (16; 16'; 66; 76) definierten Schlitz (26; 26a,26b) aufgenommen zu sein, und, wenn sich das Ende der ersten Fluidleitung (12; 12') in dem Körper (16; 16'; 66; 76) des Verbinders (10; 10'; 60; 70; 150) befindet, mit der ersten Fluidleitung (12; 12') in Eingriff zu gelangen;
die Eingriffsarme (22a, 22b) dazu ausgestaltet sind, tangential durch eine Innenfläche des Schlitzes (26; 26a,26b) in Richtung der ersten Fluidleitung (12; 12') gedrängt zu werden; und
dann, wenn sich das Verriegelungselement (18; 18'; 18a, 18b) im Schlitz (26; 26a, 26b) befindet und sich das Ende der ersten Fluidleitung (12; 12') im Körper (16; 16'; 66; 76) des Verbinders (10; 10'; 60; 70; 150) befindet, die Eingriffsarme (22a, 22b) gegen die erste Fluidleitung (12; 12') gehalten werden und entsprechende Längen aufweisen, sodass das Verriegelungselement (18; 18'; 18a, 18b) die erste Fluidleitung (12; 12') mindestens teilweise umgibt;
und
der Verbinder (10; 10'; 60; 70; 150) einen oder mehrere Sätze nach innen gerichteter Verriegelungszähne (36; 36'; 36a-f; 86) umfasst, die dazu ausgestaltet sind, an einer Außenfläche (38) der ersten Fluidleitung (12; 12') angeordnet zu sein, wobei die Verriegelungszähne in die Außenfläche (38) eingreifen, wenn der Verbinder (10; 10'; 60; 70; 150) zusammengebaut ist und sich das Ende (42) der ersten Fluidleitung (12; 12') im Körper (16; 16'; 66; 76) befindet; und
der Verbinder (10; 10'; 60; 70; 150) eine Lagerung (34; 34'; 34a-f) umfasst, dazu ausgestaltet, die Verriegelungszähne gegen die erste Fluidleitung (12; 12') zu lagern, wenn sich das Ende (42) der ersten Fluidleitung (12; 12') im Körper (16; 16'; 66; 76) befindet;
wobei die Verriegelungszähne (36; 36'; 36a-f; 86) so ausgestaltet sind, dass sie bei Eingreifen der ersten Fluidleitung (12; 12') und der Verriegelungszähne durch die erste Fluidleitung (12; 12') verformt werden, wobei die Verriegelungszähne einem Lösen des Eingriffs durch Umkehr des Eingreifens widerstehen;
die Lagerung (34; 34'; 34a-f) dem Verriegelungselement (18; 18'; 18a,18b) benachbart ist, wenn der Verbinder (10; 10'; 60; 70; 150) zusammengebaut ist, sodass das Verriegelungselement (18; 18'; 18a,18b) die Verriegelungszähne im Verbinder (10; 10'; 70) hält, wenn der Verbinder (10; 10'; 60; 70; 150) zusammengebaut ist;
das Verriegelungselement (18; 18'; 18a,18b) dazu ausgestaltet ist, im Gebrauch die erste Fluidleitung (12; 12') in einer Spanne von mindestens 200° mindestens teilweise zu umgeben; und
der Schlitz (26; 26a, 26b) teilweise durch eine Innenfläche (28) des Körpers (16; 16'; 66; 76), dazu ausgestaltet, die Eingriffsarme (22a, 22b; 22a', 22b') in Position gegen die erste Fluidleitung (12; 12') zu halten, definiert ist.

2. Verbinder nach Anspruch 1, wobei der Verbinder für den Gebrauch mit einer ersten Fluidleitung von ringförmigem Querschnitt konfiguriert ist und die Verriegelungszähne (36; 36'; 36a-f; 86) Spitzen (44; 44') aufweisen, die einen Kreis oder einen Kreisbogen von kleinerem Radius als ein Radius der ersten Fluidleitung (12; 12') definieren, sodass die Verriegelungszähne (36; 36'; 36a-f; 86) bei Eingreifen der ersten Fluidleitung (12; 12') und der Verriegelungszähne durch die erste Fluidleitung (12; 12') verformt werden.

3. Verbinder nach Anspruch 1 oder 2, wobei die Lagerung (34; 34'; 34a-f) einen Eingriffsring oder Clip umfasst, der einstückig mit den Verriegelungszähnen ausgebildet ist und dazu ausgelegt ist, neben dem Verriegelungselement angeordnet zu sein, wenn der Verbinder zusammengebaut ist, sodass der Eingriffsring oder Clip am Verriegelungselement anliegt.

4. Verbinder nach Anspruch 3, wobei das Verriegelungselement (80a, 80b) eine zweite Lagerung umfasst oder bildet und einen zweiten Satz von Verriegelungszähnen (86a, 86b) umfasst.

5. Verbinder nach einem der vorhergehenden Ansprüche, wobei die Verriegelungszähne (36; 36'; 36a-f; 86) dazu ausgestaltet sind, von einer oder mehreren Nuten oder Ausnehmungen in der Außenfläche (38) der ersten Fluidleitung (12; 12') aufgenommen zu werden.

6. Verbinder nach einem der vorhergehenden Ansprüche, wobei die Verriegelungszähne, oder die Verriegelungszähne und die Lagerung, aus einem Material hergestellt sind, das so ausgewählt ist, dass es härter als die erste Fluidleitung (12; 12') ist.

7. Verbinder nach einem der vorhergehenden Ansprüche, wobei die Verriegelungszähne (36; 36'; 86) dazu ausgestaltet sind, im Gebrauch die erste Fluidleitung (12; 12') in einer Spanne von mindestens 200°, mindestens 250°, mindestens 270°, mindestens 300°, mindestens 320°, mindestens 330°, mindestens 340°, mindestens 350° oder zwischen 350° und 355° oder annähernd 360° zu umgeben.

8. Verbinder nach einem der vorhergehenden Ansprüche, wobei das Verriegelungselement (18; 18'; 18a, 18b) dazu ausgestaltet ist, im Gebrauch die erste Fluidleitung (12; 12') in einer Spanne von mindestens 250°, mindestens 270°, mindestens 300°, mindestens 320°, mindestens 330°, mindestens 340° oder zwischen 340° und (einschließlich) 350° oder zwischen 350° und (einschließlich) 355° oder zwischen 355° und (einschließlich) 360° zu umgeben.

9. Verbinder nach einem der vorhergehenden Ansprüche, wobei die Eingriffsarme (22a', 22b') elastisch und dazu ausgestaltet sind, ausgebreitet zu werden, wenn sie durch die erste Fluidleitung (12; 12') in den Schlitz (26; 26a, 26b) eingesetzt sind, und bei Positionierung im Schlitz (26; 26a, 26b) eine solche Konfiguration anzunehmen, dass die Eingriffsarme (22a', 22b') die erste Fluidleitung (12; 12') kontaktieren.

10. Verbinder nach einem der vorhergehenden Ansprüche, wobei die Verriegelungszähne aus einem Material oder Materialien bestehen, die so ausgewählt sind:
dass sie entweder weicher als oder von einer vergleichbaren Härte wie die erste Fluidleitung sind; und/oder
dass sie zwischen den Verriegelungszähnen und der ersten Fluidleitung einen hohen Reibungskoeffizienten bereitstellen.

11. Verbinder nach einem der vorhergehenden Ansprüche in einer zumindest teilweise zusammengebauten Form, wobei das Verriegelungselement (18; 18'; 18a,18b) oder der Satz von Verriegelungszähnen (36; 36'; 36a-f; 86) oder sowohl das Verriegelungselement (18; 18'; 18a,18b) als auch der Satz von Verriegelungszähnen (36; 36'; 36a-f; 86) im Körper (16; 16'; 66; 76) befindlich ist beziehungsweise sind.

12. Verbinder nach einem der vorhergehenden Ansprüche, ferner umfassend:
ein weiteres Verriegelungselement (18b), umfassend ein Paar flexibler Eingriffsarme, die sich von dort erstrecken und dazu ausgestaltet sind, die zweite Fluidleitung (14') dazwischen aufzunehmen,
wobei der Körper (16'; 66; 76) des Verbinders (10'; 70) eine weitere Öffnung (29') definiert, die dazu ausgestaltet ist, ein Ende der zweiten Fluidleitung (14') aufzunehmen, und einen weiteren Schlitz (26b), der dazu ausgestaltet ist, ein weiteres Verriegelungselement (18b) zum Herstellen eines Eingriffs mit der zweiten Fluidleitung (14') aufzunehmen;
das weitere Verriegelungselement (18b) dazu ausgestaltet ist, mindestens teilweise von dem weiteren Schlitz (26b) aufgenommen zu werden, und dann, wenn sich das Ende der zweiten Fluidleitung (14') in dem Körper (16'; 66; 76) des Verbinders (10'; 60; 70; 150) befindet, mit dem Ende der zweiten Fluidleitung (14') in Eingriff zu gelangen, wobei die Eingriffsarme des weiteren Verriegelungselements (18b) dazu ausgestaltet sind, tangential durch eine Innenfläche des weiteren Schlitzes (26b) in Richtung des Endes der zweiten Fluidleitung (14') gedrängt zu werden; und
dann, wenn sich das weitere Verriegelungselement (18b, 80b) in dem weiteren Schlitz (26b) befindet und sich das Ende der zweiten Fluidleitung (14') im Körper (16; 66; 76) des Verbinders (10'; 70) befindet, die Eingriffsarme des weiteren Verriegelungselements (18b; 80b) gegen die zweite Fluidleitung (14') gehalten werden und entsprechende Längen aufweisen, sodass das weitere Verriegelungselement (18b) die zweite Fluidleitung (14') mindestens teilweise umgibt; und
der Verbinder (10'; 60; 70; 150) einen oder mehrere Sätze nach innen gerichteter Verriegelungszähne (36; 86b) umfasst, die dazu ausgestaltet sind, an einer Außenfläche der zweiten Fluidleitung (14') angeordnet zu sein, wobei der weitere Satz von Verriegelungszähnen (36; 86b) in die Außenfläche der zweiten Fluidleitung (14') eingreift, wenn der Verbinder (10'; 60; 70; 150) zusammengebaut ist und sich das Ende der zweiten Fluidleitung (14') im Körper (16'; 66; 76) befindet; und
der Verbinder (10'; 60; 70; 150) eine weitere Lagerung umfasst, dazu ausgestaltet, den weiteren Satz von Verriegelungszähnen gegen die zweite Fluidleitung (14') zu lagern, wenn sich das Ende der zweiten Fluidleitung (14') im Körper (16'; 66; 76) befindet;
wobei der weitere Satz von Verriegelungszähnen (36; 86b) so ausgestaltet ist, dass diese bei Eingreifen der zweiten Fluidleitung (14') und des weiteren Satzes von Verriegelungszähnen (36; 86b) von der zweiten Fluidleitung (14') verformt werden, wobei der weitere Satz von Verriegelungszähnen (36; 86b) einem Lösen des Eingriffs durch Umkehr des Eingreifens widersteht; und
die zweite Lagerung einstückig mit dem weiteren Verriegelungselement (18b; 80b), mit ihm verbunden oder ihm benachbart ist, wenn der Verbinder zusammengebaut ist, sodass das weitere Verriegelungselement (18b; 80b) den weiteren Satz von Verriegelungszähnen (36; 86b) in dem Verbinder (10'; 60; 70; 150) hält, wenn der Verbinder (10'; 60; 70; 150) zusammengebaut ist.

## Revendications

1. Connecteur en vue de la formation d'un raccordement fluidique entre au moins un premier conduit à fluide (12; 12') et un second conduit à fluide (14; 14'), le connecteur (10; 10' ; 60 ; 70 ; 150) comprenant : un corps (16; 16'; 66; 76) définissant au moins une ouverture configurée afin de recevoir un embout (42) du premier conduit à fluide (12; 12') ;
un élément de verrouillage (18; 18' ; 18a, 18b) comprenant une paire de branches d'engagement flexibles (22a, 22b ; 22a', 22b') s'étendant à partir de celui-ci, les branches d'engagement (22a, 22b ; 22a', 22b') étant configurées afin d'accueillir l'embout du premier conduit à fluide (12 ; 12') entre elles ;
l'élément de verrouillage (18; 18' ; 18a, 18b) étant configuré afin d'être reçu au moins partiellement par une fente (26 ; 26a, 26b) définie par le corps (16 ; 16' ; 66 ; 76) et lorsque l'embout du premier conduit à fluide (12; 12') est placé à l'intérieur du corps (16; 16' ; 66 ; 76) du connecteur (10; 10' ; 60 ; 70 ; 150), afin d'être engagé avec le premier conduit à fluide (12; 12') ;
les branches d'engagement (22a, 22b) étant configurées afin d'être pressées tangentiellement par une surface interne de la fente (26 ; 26a, 26b) vers le premier conduit à fluide (12; 12') ; et
lorsque l'élément de verrouillage (18; 18' ; 18a, 18b) est placé dans la fente (26; 26a, 26b) et que l'embout du premier conduit à fluide (12; 12') est placé dans le corps (16 ; 16' ; 66 ; 76) du connecteur (10; 10' ; 60 ; 70; 150), les branches d'engagement (22a, 22b) sont retenues contre le premier conduit à fluide (12 ; 12') et ont des longueurs respectives telles que l'élément de verrouillage (18 ; 18'; 18a, 18b) entoure au moins partiellement le premier conduit à fluide (12 ; 12') ;
le connecteur (10; 10' ; 60 ; 70 ; 150) comprend un ou plusieurs ensembles de dents de verrouillage dirigées vers l'intérieur (36 ; 36' ; 36a-f ; 86) configurées afin d'être disposées sur une surface extérieure (38) du premier conduit à fluide (12 ; 12') avec les dents de verrouillage engagées avec la surface extérieure (38) lorsque le connecteur (10 ; 10'; 60 ; 70 ; 150) est assemblé et que l'embout (42) du premier conduit à fluide (12; 12') est placé dans le corps (16 ; 16' ; 66 ; 76) ; et
le connecteur (10; 10' ; 60 ; 70 ; 150) comprend un support (34; 34' ; 34a-f) configuré afin de supporter les dents de verrouillage contre le premier conduit à fluide (12 ; 12') lorsque l'embout (42) du premier conduit à fluide (12; 12') est placé dans le corps (16 ; 16' ; 66 ; 76) ;
dans lequel les dents de verrouillage (36 ; 36' ; 36a-f ; 86) sont configurées de manière à être déformées par le premier conduit à fluide (12; 12') sur engagement du premier conduit à fluide (12; 12') et des dents de verrouillage, dans lequel les dents de verrouillage résistent au désengagement par inversion de l'engagement;
le support (34; 34' ; 34a-f) est adjacent à l'élément de verrouillage (18; 18' ; 18a, 18b) lorsque le connecteur (10 ; 10' ; 60 ; 70 ; 150) est assemblé, de sorte que l'élément de verrouillage (18 ; 18' ; 18a, 18b) retient les dents de verrouillage dans le connecteur (10 ; 10' ; 70) lorsque le connecteur (10; 10' ; 60 ; 70 ; 150) est assemblé ;
l'élément de verrouillage (18; 18'; 18a, 18b) est configuré afin d'entourer pendant l'utilisation au moins partiellement le premier conduit à fluide (12; 12') dans une envergure d'au moins 200° ; et
la fente (26 ; 26a, 26b) est définie au moins en partie par une surface interne (28) du corps (16; 16' ; 66 ; 76) configurée afin de maintenir les branches d'engagement (22a, 22b ; 22a', 22b') en position contre le premier conduit à fluide (12; 12').

2. Connecteur tel que revendiqué dans la revendication 1, dans lequel le connecteur est configuré en vue de l'utilisation avec un premier conduit à fluide de section transversale circulaire, et les dents de verrouillage (36 ; 36' ; 36a-f ; 86) ont des pointes (44; 44') qui définissent un cercle ou un arc circulaire de rayon plus petit qu'un rayon du premier conduit à fluide (12 ; 12'), de sorte que les dents de verrouillage (36 ; 36' ; 36a-f ; 86) sont déformées par le premier conduit à fluide (12; 12') sur engagement du premier conduit à fluide (12; 12') et des dents de verrouillage.

3. Connecteur tel que revendiqué soit dans la revendication 1, soit dans la 2, dans lequel le support (34; 34' ; 34a-f) comprend un anneau ou un clip d'engagement qui fait corps avec les dents de verrouillage, et est adapté afin d'être disposé à côté de l'élément de verrouillage lorsque le connecteur est assemblé de sorte que l'anneau ou un clip d'engagement jouxte l'élément de verrouillage.

4. Connecteur tel que revendiqué dans la revendication 3, dans lequel l'élément de verrouillage (80a, 80b) comprend ou constitue un second support et comprend un second ensemble de dents de verrouillage (86a, 86b).

5. Connecteur tel que revendiqué dans une quelconque des revendications précédentes, dans lequel les dents de verrouillage (36 ; 36' ; 36a-f ; 86) sont configurées afin d'être reçues par une ou plusieurs rainures ou cavités dans la surface extérieure (38) du premier conduit à fluide (12; 12').

6. Connecteur tel que revendiqué dans une quelconque des revendications précédentes, dans lequel les dents de verrouillage, ou les dents de verrouillage et le support sont en un matériau sélectionné afin d'être plus dur que le premier conduit à fluide (12; 12').

7. Connecteur tel que revendiqué dans une quelconque des revendications précédentes, dans lequel les dents de verrouillage (36 ; 36' ; 86) sont configurées afin d'entourer, au moins partiellement pendant l'utilisation, le premier conduit à fluide (12 ; 12') dans une envergure d'au moins 200°, d'au moins 250°, d'au moins 270°, d'au moins 300°, d'au moins 320°, d'au moins 330°, d'au moins 340°, d'au moins 350° ou entre 350° et 355°, ou approximativement de 360°.

8. Connecteur selon une quelconque des revendications précédentes, dans lequel l'élément de verrouillage (18; 18'; 18a, 18b) est configuré afin d'entourer, au moins partiellement pendant l'utilisation, le premier conduit à fluide (12 ; 12') dans une envergure d'au moins 250°, d'au moins 270°, d'au moins 300°, d'au moins 320°, d'au moins 330°, d'au moins 340°, ou entre 340° à 350° (inclus), ou entre 350° à 355° (inclus), ou entre 355° à 360° (inclus).

9. Connecteur selon une quelconque des revendications précédentes, dans lequel les branches d'engagement flexibles (22a', 22b') sont souples et configurées afin d'être écartées lorsqu'elles sont insérées dans la fente (26 ; 26a, 26b) par le premier conduit à fluide (12 ; 12') et afin d'adopter une configuration une fois placées dans la fente (26 ; 26a, 26b) de sorte que les branches d'engagement (22a', 22b') entrent en contact avec le premier conduit à fluide (12 ; 12').

10. Connecteur tel que revendiqué dans une quelconque des revendications précédentes, dans lequel les dents de verrouillage sont en un matériau ou des matériaux sélectionnés :
afin d'être soit plus mou, soit de dureté comparable à celle du premier conduit à fluide ; et/ou
afin d'assurer un haut coefficient de frottement entre les dents de verrouillage et le premier conduit à fluide.

11. Connecteur tel que revendiqué dans une quelconque des revendications précédentes, dans une forme assemblée au moins partiellement, dans lequel l'élément de verrouillage (18 ; 18' ; 18a, 18b) ou l'ensemble de dents de verrouillage (36 ; 36' ; 36a-f ; 86) est, ou l'élément de verrouillage (18 ; 18' ; 18a, 18b) et l'ensemble de dents de verrouillage (36 ; 36' ; 36a-f ; 86) sont situés tous deux dans le corps (16 ; 16' ; 66 ; 76).

12. Connecteur tel que revendiqué dans une quelconque des revendications précédentes, comprenant par ailleurs
un autre élément de verrouillage (18b) comprenant une paire de branches d'engagement flexibles s'étendant à partir de celui-ci et configurées afin d'accueillir l'embout du second conduit à fluide (14') entre elles ;
dans lequel le corps (16' ; 66 ; 76) du connecteur (10' ; 70) définit une autre ouverture (29') configurée afin de recevoir un embout du second conduit à fluide (14'), et une autre fente (26b) configurée afin de recevoir un autre élément de verrouillage (18b) en vue de l'engagement avec le second conduit à fluide (14') ;
l'autre élément de verrouillage (18b) est configuré afin d'être reçu au moins partiellement par l'autre fente (26b) et, lorsque l'embout du second conduit à fluide (14') est placé dans le corps (16' ; 66 ; 76) du connecteur (10' ; 60 ; 70 ; 150), afin d'être engagé avec l'embout du second conduit à fluide (14'), les branches d'engagement de l'autre élément de verrouillage (18b) étant configurées afin d'être pressées tangentiellement par une surface interne de l'autre fente (26b) vers l'embout du second conduit à fluide (14') ; et
lorsque l'autre élément de verrouillage (18b ; 80b) est placé dans l'autre fente (26b) et l'embout du second conduit à fluide (14') est placé dans le corps (16' ; 66 ; 76) du connecteur (10' ; 70), les branches d'engagement de l'autre élément de verrouillage (18b ; 80b) sont retenues contre le second conduit à fluide (14') et ont des longueurs respectives de sorte que l'autre élément de verrouillage (18b) entoure au moins partiellement le second conduit à fluide (14') ; et
le connecteur (10' ; 60 ; 70 ; 150) comprend un ou plusieurs ensembles de dents de verrouillage dirigées vers l'intérieur (36 ; 86b) configurées afin d'être disposées sur une surface extérieure du second conduit à fluide (14') avec l'autre ensemble de dents de verrouillage (36 ; 86b) engagées avec la surface extérieure du second conduit à fluide (14') lorsque le connecteur (10' ; 60 ; 70 ; 150) est assemblé et que l'embout du second conduit à fluide (14') est placé dans le corps (16' ; 66 ; 76) ; et
le connecteur (10' ; 60 ; 70 ; 150) comprend un autre support configuré afin de supporter l'autre ensemble de dents de verrouillage contre le second conduit à fluide (14') lorsque l'embout du second conduit à fluide (14') est placé dans le corps (16' ; 66 ; 76) ;
dans lequel l'autre ensemble de dents de verrouillage (36 ; 86b) est configuré de manière à être déformé par le second conduit à fluide (14') sur engagement du second conduit à fluide (14') et l'autre ensemble de dents de verrouillage (36 ; 86b) dans lequel l'autre ensemble de dents de verrouillage (36 ; 86b) résiste au désengagement par inversion de l'engagement ; et
le second support fait corps avec, est connecté ou adjacent à l'autre élément de verrouillage (18b ; 80b) lorsque le connecteur est assemblé, de sorte que l'autre élément de verrouillage (18b ; 80b) retient l'autre ensemble de dents de verrouillage (36 ; 86b) dans le connecteur (10' ; 60 ; 70 ; 150) lorsque le connecteur (10' ; 60 ; 70 ; 150) est assemblé.
